# EUROPÄISCHE PATENTSCHRIFT

(11) **EP 3 084 877 B1**
(45) Veröffentlichungstag und Bekanntmachung des Hinweises auf die Patenterteilung: **21.02.2018**
(21) Anmeldenummer: 14805298.8
(22) Anmeldetag: 01.12.2014
(51) Int. Cl.: H01M 10/48, H01M 10/633

(54) **VORRICHTUNG UND VERFAHREN ZUR ÜBERWACHUNG EINES ENERGIESPEICHERS SOWIE ENERGIESPEICHER MIT DER VORRICHTUNG**
DEVICE AND METHOD FOR MONITORING AN ENERGY STORAGE DEVICE
DISPOSITIF ET METHODE POUR LA SURVEILLANCE D'UN DISPOSITIF DE STOCKAGE D'ENERGIE

(30) Priorität: 17.12.2013 DE 102013226145
(43) Veröffentlichungstag der Anmeldung: 26.10.2016
(73) Patentinhaber: Robert Bosch GmbH, 70442 Stuttgart (DE)
(72) Erfinder: ESTEGHLAL, Gholamabas, 70499 Stuttgart - Weilimdorf (DE)
(86) Internationale Anmeldenummer: PCT/EP2014/076084
(87) Internationale Veröffentlichungsnummer: WO 2015/090915

(56) Entgegenhaltungen:
- EP-A2- 1 309 029
- DE-A1-102010 001 374
- JP-A- 2001 283 939
- US-A1- 2011 210 703
- US-A1- 2013 177 791

## Beschreibung

### Gebiet der Erfindung

Die Erfindung betrifft eine Vorrichtung und Verfahren zur Überwachung eines Energiespeichers bzw. Batteriesystems sowie einen Energiespeicher mit der Vorrichtung. Die Erfindung betrifft weiterhin ein Fahrzeug, insbesondere ein Kraftfahrzeug wie Elektrokraftfahrzeug oder Hybridfahrzeug, mit dem Energiespeicher.

### Stand der Technik

Es ist absehbar, dass sowohl bei stationären Anwendungen, zum Beispiel bei Windkraftanlagen, in der Industrie oder in der Haustechnik, als auch bei mobilen Anwendungen, zum Beispiel bei Elektrokraftfahrzeugen (electric vehicles, EV) oder Hybridfahrzeugen (hybrid electric vehicles, HEV), als wiederaufladbare Energiespeicher vermehrt neue Batteriesysteme, zum Beispiel mit Lithium-Ionen-Akkumulatoren oder Nickel-Metallhybrid-Akkumulatoren, zum Einsatz kommen werden.

Die Batteriesysteme müssen sehr hohe Anforderungen bezüglich des nutzbaren Energieinhalts, des Lade-/ Entlade-Wirkungsgrads, der Zuverlässigkeit, der Lebensdauer und des unerwünschten Kapazitätsverlusts durch häufige Teilentladung erfüllen.

Ein Batteriesystem bzw. Energiespeicher umfasst eine Vielzahl von Batteriezellen. Aufgrund ihres Zelleninnenwiderstands und der stattfindenden elektrochemischen Prozesse erwärmen sich die Batteriezellen während des Ladens und Entladens. Die Batteriezellen können in Reihe (Serie) verschaltet werden, um die elektrische Spannung zu erhöhen, und / oder parallel verschaltet werden, um den maximalen elektrischen Strom zu erhöhen. Dabei können die Batteriezellen zu Batterieeinheiten bzw. Batteriemodulen zusammengefasst werden. Das Batteriemodul hält die Batteriezellen und nimmt mechanische Beanspruchungen auf, sodass es die Batteriezellen vor Beschädigungen schützt. Weiterhin kann das Batteriemodul eine mechanische Verspannung der Batteriezellen realisieren und eine elektrische Isolation bereitstellen. Außerdem kann das Batteriemodul zur Temperierung der Batteriezellen dienen.

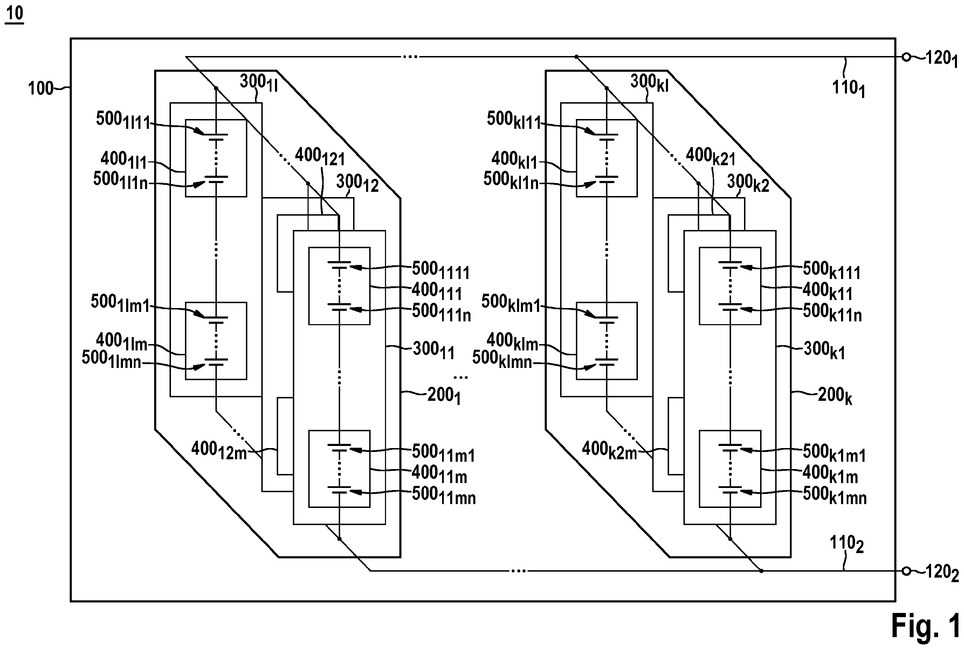

Figur 1 zeigt eine schematische Ansicht eines Energiespeichers 10 gemäß des Stands der Technik, der beispielsweise für eine stationäre Anwendung eingesetzt werden kann. Der Energiespeicher bzw. das Batteriesystem 10 umfasst eine Vielzahl von Batteriezellen 500₁₁₁₁ bis 500ₖₗₘₙ. Die Vielzahl von Batteriezellen 500₁₁₁₁ bis 500ₖₗₘₙ ist in einer Vielzahl von Batteriemodulen 400₁₁₁ bis 400ₖₗₘ organisiert, sodass jedes Batteriemodul n Batteriezellen umfasst. Die Vielzahl von Batteriemodulen 400₁₁₁ bis 400ₖₗₘ ist in einer Vielzahl von Batteriesträngen 300₁₁ bis 300ₖₗ organisiert, sodass jeder Batteriestrang m Batteriemodule umfasst. Die Vielzahl von Batteriesträngen 300₁₁ bis 300ₖₗ ist in einer Vielzahl von Teilbatterien 200₁ bis 200ₖ organisiert, sodass jede Teilbatterie I Batteriestänge umfasst. Die Vielzahl von Teilbatterien 200₁ bis 200ₖ ist als Batterie 100 organisiert, sodass die Batterie k Teilbatterien umfasst. Die Batterie 100 umfasst Leitungen 110₁, 110₂, zum Verbinden der Teilbatterien 200₁ bis 200ₖ, sodass die elektrische Energie an Anschlüssen 120₁, 120₂ verfügbar ist.

Der für den Betrieb der Batteriezellen zulässige Temperaturbereich liegt typischer Weise zwischen 0 °C und +40 °C, vorzugsweise zwischen +25 °C und +35 °C. Im unteren Bereich der Betriebstemperatur kann die Leistungsfähigkeit der Batteriezellen deutlich abnehmen. Bei Temperaturen von unter ca. 0 °C steigt der Innenwiderstand der Batteriezellen stark an, und die Leistungsfähigkeit und der Wirkungsgrad der Batteriezellen nehmen mit weiter fallenden Temperaturen kontinuierlich ab. Dabei kann auch eine irreversible Schädigung der Batteriezellen auftreten. Auch wenn die Betriebstemperatur überschritten wird, kann die Leistungsfähigkeit der Batteriezellen deutlich abnehmen. Bei Temperaturen über ca. 40 °C wird die Lebensdauer der Batteriezellen reduziert. Dabei kann ebenfalls eine irreversible Schädigung der Batteriezellen auftreten. Weiterhin liegt der für den Betrieb der Batteriezellen zulässige Temperaturunterschied (Temperaturgradient) in einer Batteriezelle und / oder innerhalb eines Batteriemoduls oder einer Batterie typischer Weise zwischen 5 Kelvin und 10 Kelvin. Bei größeren Temperaturunterschieden können verschiedene Bereiche einer Batteriezelle bzw. verschiedene Batteriezellen eines Batteriemoduls oder einer Batterie unterschiedliche Belastungen erfahren oder sogar (partiell) überlastet und / oder geschädigt werden. Weiterhin besteht aufgrund von Temperaturunterschieden und / oder Temperaturänderungen eine Gefahr der Bildung von Kondenswasser in der Batterie. Die Schädigung kann zu einer beschleunigten Alterung der Batteriezellen oder einem thermischen Durchgehen (Thermal Runaway) der Batteriezellen, das eine Gefahr für Mensch und Umwelt darstellt, führen.

Zum Antrieb von Fahrzeugen kann als Traktionsbatterie ein Batteriesystem, in dem beispielsweise ca. 100 Batteriezellen in Serie bzw. parallel verschaltet sind, eingesetzt werden. Bei einem Hochvoltbatteriesystem kann die Gesamtspannung somit beispielsweise 450 V oder 600 V betragen.

In einem hybriden Antriebsstrang eines Fahrzeugs werden Li-Ionen-Hochleistungsbatteriezellen mit einer sehr hohen Dynamik betrieben. Während kurzzeitiger Spitzenbelastungen, die beispielsweise durch Rekuperation von Bremsenergie beim Bremsen oder Boostunterstützung beim Beschleunigen entstehen, müssen die Batteriezellen in einer sehr kurzen Zeit eine hohe Leistung (bei Ladung) aufnehmen oder (bei Entladung) abgeben. Aufgrund des Innenwiderstands der Batteriezellen führen diese kurzen Spitzenbelastungen zu einer signifikanten Erwärmung der Batteriezellen. Der Wirkungsgrad der Batteriezellen beim Laden bzw. Entladen ist sehr hoch (ca. 95 %); dennoch ist die dabei entstehende Abwärme nicht vernachlässigbar. Bei einer Traktionsleistung von beispielsweise 60 KW ergibt ein Verlust von 5 % eine Verlustleistung von 3 KW. Weiterhin können, beispielsweise in den Sommermonaten oder in wärmeren Regionen, Außentemperaturen, die 40 °C und mehr betragen können, außerhalb des zulässigen Temperaturbereichs liegen, so dass die Batteriezellen ohne Kühlung keine Lebensdauer von, beispielsweise, zehn Jahren erreichen können.

Um die Sicherheit, Funktion und Lebensdauer des Batteriemoduls bzw. Batteriesystems zu gewährleisten, ist es daher erforderlich, die Batteriezellen innerhalb des vorgegebenen Temperaturbereichs zu betreiben. Einerseits entsteht, wie oben beschrieben, während des Betriebs der Batteriezellen Wärme, die abgeführt werden muss, um ein Aufheizen der Batteriezellen über die kritische Maximaltemperatur zu vermeiden. Anderseits kann es erforderlich sein, die Batteriezellen bei tiefen Temperaturen auf eine Mindesttemperatur aufzuheizen. Zur Einhaltung des vorgegebenen Temperaturbereichs wird das Batteriemodul bzw. Batteriesystem temperiert, d. h. bedarfsgerecht gekühlt bzw. geheizt.

Dazu kann das Batteriemodul bzw. Batteriesystem ein Fluid, zum Beispiel eine Flüssigkeit wie Alkohol beispielsweise Propan-1,2,3-triol (Glycerol, Glycerin), Öl oder Wasser beispielsweise Salzwasser oder ein Flüssigkeitsgemisch, als Temperiermittel beispielsweise Kühlmittel in einem Temperiermittelkreislauf umfassen.

Beispielsweise kann die Kühlung der Batteriezellen durch Kühlplatten, auf denen die Batteriezellen montiert sind, erreicht werden. In den Kühlplatten nimmt entweder ein Kühlmittel wie Kühlwasser (Luft-Wärme-Kühler) oder ein Kältemittel, das durch die Wärme verdampft, (Verdampfer) die Wärme der Batteriezellen auf und führt sie über einen Kühler an die Umgebung oder eine Klimaanlage (Airconditioning, AC) ab. Ein Kühlsystem umfasst neben den Kühlplatten oder dem Verdampfer und dem Kühler weiterhin Schläuche und / oder Rohre, beispielsweise aus Kunststoff oder Metall wie Aluminium, zum Verbinden der Kühlplatten, des Verdampfers und / oder des Kühlers. Das Kühlsystem kann weiterhin eine Einrichtung zur Absperrung und / oder Regelung des Temperiermittelflusses, zum Beispiel eine Absperreinrichtung wie einen Absperrhahn, eine Absperrklappe oder einen Absperrschieber, oder ein Ventil wie ein handbetätigtes Ventil, ein elektromotorisch betätigtes Ventil oder ein elektromagnetisch Ventil, umfassen. Das Kühlsystem kann weiterhin einen Durchflusssensor, zum Beispiel einen Ovalradzähler, (Wälz-)Kolbenzähler, Flügelradzähler, magnetisch-induktiven Durchflusssensor, induktiven Durchflusssensor, Ultraschalldurchflusssensor oder Coriolis-Massendurchflusssensor, zur Erkennung von Defekten und / oder Störungen des Kühlsystems wie Verstopfungen, Defekten oder Störungen der Absperreinrichtung bzw. Regelungseinrichtung, oder Leckagen, die zu einer Unterbrechung des Temperiermittelflusses führen, umfassen.

EP 1 309 029 A2 offenbart ein Verfahren und eine Vorrichtung zur Kontrolle der Kühlung und Detektierung von Abnormitäten in einem Batteriepacksystem, das aus einer Mehrzahl von Batteriepackblöcken zusammengesetzt ist, die miteinander in Reihe, parallel oder über eine Kombination aus einer Reihenschaltung und einer Parallelschaltung verbunden sind, wobei jeder der Batteriepackblöcke durch Schalten einer Mehrzahl von Zellen in Reihe gebildet ist, und jeder Batteriepackblock eine Kühlungseinheit zum Bereitstellen eines Luftstroms in dem dazugehörigen Batteriepackblock enthält, und ein Kühlungsmodus eines Batteriepackblocks gewechselt wird, wenn ein Ladezustandsunterschied zwischen dem Batteriepackblock und einem anderen Batteriepackblock einen Schwellenwert überschreitet.

Um die Ausfallsicherheit, Zuverlässigkeit und Verfügbarkeit von Batteriesystemen zu erhöhen und die Kosten der Batteriesysteme zu reduzieren, ist es somit erforderlich, die Überwachung des Temperiersystems zu verbessern.

### Offenbarung der Erfindung

### Vorteile der Erfindung

Die erfindungsgemäßen Vorrichtungen und Verfahren mit den Merkmalen der unabhängigen Ansprüche haben den Vorteil, dass der Temperiermittelfluss überwacht und Störungen bzw. Defekte des Kühlsystems wie Verstopfungen, Bauteildefekte oder Leckagen erkannt und signalisiert werden können. Dadurch kann die Ausfallsicherheit, Zuverlässigkeit und Verfügbarkeit von Engeriespeichern bzw. Batteriesystemen verbessert werden. Weiterhin kann auf Durchflusssensoren verzichtet werden. Dadurch können der Aufbau des Batteriesystems vereinfacht und die Anzahl von Komponenten des Batteriesystems reduziert werden. Somit kann die Ausfallsicherheit weiter erhöht werden. Weiterhin können die Kosten beispielsweise Herstellungskosten, Wartungskosten oder Instandsetzungskosten reduziert und Ressourcen geschont werden.

Zweckmäßiger Weise kann der Temperaturschwellwert einem vorbestimmten maximalen Temperaturwert entsprechen. Dadurch kann eine maximal zulässige Betriebstemperatur des Energiespeichers eingehalten werden. Somit kann die Sicherheit und Lebenserwartung der Batteriezellen erhöht werden.

Zweckmäßiger Weise kann der Temperaturschwellwert durch einen Temperaturmittelwert aus der Vielzahl von Temperaturmittelwerten bestimmt oder mitbestimmt sein. Dadurch können die Batteriezellen des Energiespeichers, unter Berücksichtigung ihres Alters und ihrer aktuellen Belastung, miteinander verglichen werden. Weiterhin kann auf eine Bereitstellung und Speicherung von vorbestimmten Vergleichswerten verzichtet werden.

Zweckmäßiger Weise kann die Einrichtung zum Bestimmen als dezentrale Vorverarbeitungseinrichtung ausgebildet sein. Dadurch können die Übertragung von Werten und die Belastung der zentralen Verarbeitungseinrichtung reduziert werden. Weiterhin kann die Anzahl von Verbindunsgleitungen reduziert werden. Zweckmäßiger Weise kann die Einrichtung zum Bestimmen und / oder die Einrichtung zum Bewerten und Bestimmen als zentrale Verarbeitungseinrichtung sein. Dadurch kann die Komplexität der Überwachungsvorrichtung reduziert werden. Weiterhin kann die Flexibilität und Wartbarkeit der Überwachungvorrichtung erhöht werden.

Zweckmäßiger Weise können die Batteriegruppen als Teilbatterien, Batteriestänge oder Batteriemodule ausgebildet sein. Dadurch kann die Überwachungsvorrichtung an den Aufbau des Energiespeichers angepasst werden.

Die Erfindung stellt ein Batteriesystem bereit, das die zuvor beschriebene Vorrichtung umfasst.

Die Erfindung stellt weiterhin ein Fahrzeug, insbesondere Kraftfahrzeug wie Elektrokraftfahrzeug, Hybridfahrzeug oder Elektromotorrad (Elektro-Bike, E-Bike), Elektrofahrrad (Pedal Electric Cycle, Pedelec), ein Seefahrzeug wie Elektroboot oder Unterseeboot (U-Boot), ein Luftfahrzeug oder ein Raumfahrzeug, bereit, das die zuvor beschriebene und mit dem Fahrzeug verbundene Vorrichtung oder das zuvor beschriebene und mit dem Fahrzeug verbundene Batteriesystem umfasst.

Zweckmäßiger Weise kann der Temperaturschwellwert einem vorbestimmten maximalen Temperaturwert entsprechen. Dadurch kann eine maximal zulässige Betriebstemperatur des Energiespeichers eingehalten werden. Somit kann die Sicherheit und Lebenserwartung der Batteriezellen erhöht werden.

Zweckmäßiger Weise kann der Temperaturschwellwert durch einen Temperaturmittelwert aus der Vielzahl von Temperaturmittelwerten bestimmt oder mitbestimmt werden. Dadurch können die Batteriezellen des Energiespeichers, unter Berücksichtigung ihres Alters und ihrer aktuellen Belastung, miteinander verglichen werden. Weiterhin kann auf eine Bereitstellung und Speicherung von vorbestimmten Vergleichswerten verzichtet werden.

Zweckmäßiger Weise kann die Einrichtung zum Bestimmen als dezentrale Vorverarbeitungseinrichtung ausgebildet werden. Dadurch können die Übertragung von Werten und die Belastung der zentralen Verarbeitungseinrichtung reduziert werden. Weiterhin kann die Anzahl von Verbindunsgleitungen reduziert werden.

Zweckmäßiger Weise kann die Einrichtung zum Bestimmen und / oder die Einrichtung zum Bewerten und Bestimmen als zentrale Verarbeitungseinrichtung ausgebildet werden. Dadurch kann die Komplexität der Überwachungsvorrichtung reduziert werden. Weiterhin kann die Flexibilität und Wartbarkeit der Überwachungvorrichtung erhöht werden.

Zweckmäßiger Weise können die Batteriegruppen als Teilbatterien, Batteriestänge oder Batteriemodule ausgebildet werden. Dadurch kann die Überwachungsvorrichtung an den Aufbau des Energiespeichers angepasst werden.

Die Erfindung stellt weiterhin ein Computerprogramm bereit, das auf einem Datenträger oder in einem Speicher eines Computers gespeichert ist und das von dem Computer lesbare Befehle umfasst, die zur Ausführung eines der zuvor beschriebenen Verfahren bestimmt sind, wenn die Befehle auf dem Computer ausgeführt werden.

Die Erfindung stellt weiterhin ein Computerprogrammprodukt bereit, das das zuvor beschriebene Computerprogramm umfasst.

Es liegt im Rahmen der Erfindung, die Verfahrensschritte nicht zwangsläufig in der beschriebenen Reihenfolge auszuführen. In einer weiteren Ausführungsform können die Verfahrensschritte auch ineinander verschachtelt sein (interleaving).

Weiterhin ist es möglich, dass einzelne Abschnitte des beschriebenen Verfahrens als einzelne verkaufsfähige Einheiten und restliche Abschnitte des Verfahrens als andere verkaufsfähige Einheiten ausgebildet werden können. Damit kann das erfindungsgemäße Verfahren als verteiltes System auf unterschiedlichen Computer-basierten Instanzen, zum Beispiel Client-Server-Instanzen, zur Ausführung kommen. So ist es beispielsweise möglich, dass ein Modul seinerseits unterschiedliche Sub-Module umfasst.

### Kurze Beschreibung der Zeichnungen

Ausführungsbeispiele der Erfindung sind in den Zeichnungen dargestellt und in der nachfolgenden Beschreibung näher erläutert.

Es zeigen:
Figur 1 eine schematische Ansicht eines Energiespeichers 10 gemäß des Stands der Technik,
Figur 2 eine schematische Ansicht eines Energiespeichers 20 gemäß einer Ausführungsform der Erfindung,
Figur 3 eine schematische Ansicht eines Energiespeichers 30 gemäß einer anderen Ausführungsform der Erfindung,
Figur 4 einen beispielhaften zeitlichen Temperaturverlauf bei einem Teilausfall gemäß der Ausführungsformen der Erfindung, und
Figur 5 einen beispielhaften zeitlichen Temperaturverlauf bei einem Totalausfall gemäß der Ausführungsformen der Erfindung.

### Ausführungsformen der Erfindung

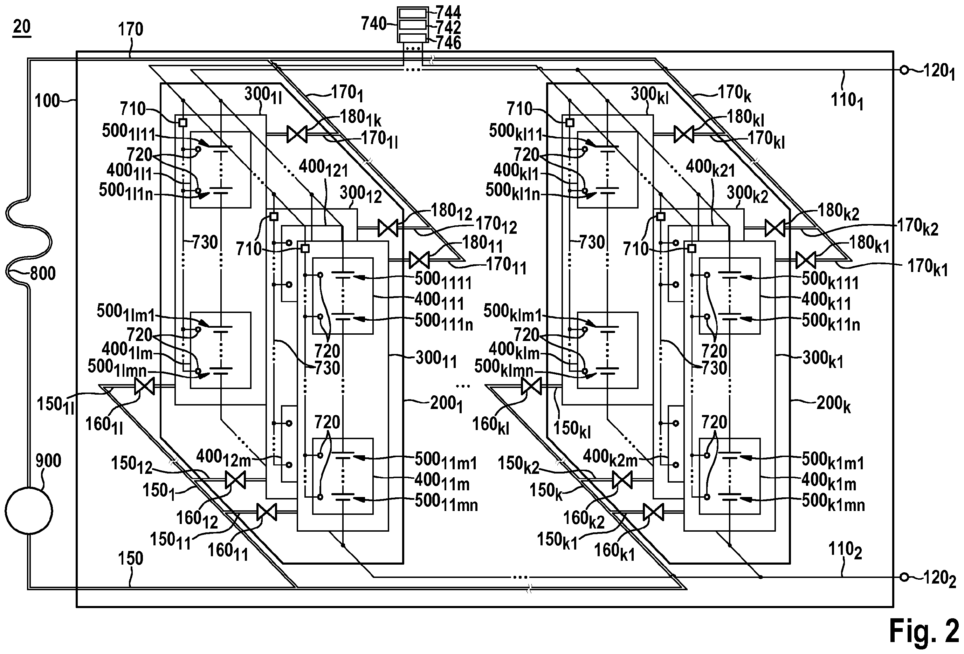

Figur 2 zeigt eine schematische Ansicht eines Energiespeichers 20 gemäß einer Ausführungsform der Erfindung.

Der Energiespeicher bzw. das Batteriesystem 20 umfasst eine Vielzahl von Batteriezellen 500₁₁₁₁ bis 500ₖₗₘₙ. Jede Batteriezelle kann beispielsweise eine Spannung von 4,5 V und eine Kapazität von 60-75 Ah aufweisen. Die Vielzahl von Batteriezellen 500₁₁₁₁ bis 500ₖₗₘₙ ist in einer Vielzahl von Batteriemodulen 400₁₁₁ bis 400ₖₗₘ organisiert, sodass jedes Batteriemodul n Batteriezellen umfasst. Jedes Batteriemodul kann beispielsweise n = 11 bis 13 Batteriezellen, die in Serie verschaltet sind, umfassen und somit eine Spannung von 50-60 V und eine Kapazität von 60-75 Ah aufweisen. Die Vielzahl von Batteriemodulen 400₁₁₁ bis 400ₖₗₘ ist in einer Vielzahl von Batteriesträngen 300₁₁ bis 300ₖₗ organisiert, sodass jeder Batteriestrang m Batteriemodule umfasst. Jeder Batteriestrang kann beispielsweise m = 13 bis 20 Batteriemodule, die in Serie verschaltet sind, umfassen und somit eine Spannung von 640-1170 V und eine Kapazität von 60-75 Ah aufweisen. Die Vielzahl von Batteriesträngen 300₁₁ bis 300ₖₗ ist in einer Vielzahl von Teilbatterien 200₁ bis 200ₖ organisiert, sodass jede Teilbatterie I Batteriestänge umfasst. Jede Teilbatterie kann beispielsweise I = 80 Batteriestränge, die parallel verschaltet sind, umfassen und somit eine Spannung von 640-1170 V und eine Kapazität von 4800-6000 Ah aufweisen. Die Vielzahl von Teilbatterien 200₁ bis 200ₖ ist als Batterie 100 organisiert, sodass die Batterie k Teilbatterien umfasst. Die Batterie 100 kann beispielsweise k = 2 bis 4 Teilbatterien, die parallel verschaltet sind, umfassen und somit eine Spannung von 640-1170 V und eine Kapazität von 9600-24000 Ah aufweisen und insgesamt 22800-374400 Batteriezellen umfassen. Die Batterie 100 umfasst Leitungen 110₁, 110₂, zum Verbinden der Teilbatterien 200₁ bis 200ₖ, sodass die elektrische Energie an Anschlüssen 120₁, 120₂ verfügbar ist.

Die Batteriezellen 500₁₁₁₁ bis 500ₖₗₘₙ können prismatisch beispielsweise quaderförmig sein und jeweils ein Zellengehäuse und einen Zellendeckel mit jeweils zwei elektrischen Zellenanschlüssen, zum Beispiel aus Aluminium oder Kupfer, umfassen. Zur elektrischen Verbindung können die elektrischen Zellenanschlüsse beispielsweise jeweils ein Gewindeloch umfassen. Zur elektrischen Verbindung der Batteriezellen 500₁₁₁₁ bis 500ₖₗₘₙ zu den Batteriemodulen 400₁₁₁ bis 400ₖₗₘ können Verbindungsstücke beispielsweise Zellenverbinder, zum Beispiel aus Aluminium oder Kupfer, dienen, die die Zellenanschlüsse der Batteriezellen 500₁₁₁₁ bis 500ₖₗₘₙ gemäß des jeweiligen Erfordernisses miteinander elektrisch verbinden. Zur Herstellung eines Batteriemoduls 400₁₁₁ bis 400ₖₗₘ können die Verbindungstücke, beispielsweise nach räumlicher Ausrichtung der Batteriezellen 500₁₁₁₁ bis 500ₖₗₘₙ, an den Zellenanschlüssen, zum Beispiel mittels eines Lasers, angeschweißt werden.

Die Batteriezellen 500₁₁₁₁ bis 500ₖₗₘₙ können als Primärzellen bzw. Primärelemente, die nicht wiederaufladbar sind, oder als Sekundärzellen, die wiederaufladbar sind, ausgebildet sein. Die Sekundärzellen können beispielsweise als Lithium-Ionen-Akkumulator (Lithium-Akkumulator, Lithium-Ionen-Akku, Li-Ion-Akku, Li-Ionen-Sekundärbatterie) oder Lithium-Polymer-Akkumulator (LiPoly-Akku, LiPo-Akku) ausgebildet sein. Die Batteriezellen 500₁₁₁₁ bis 500ₖₗₘₙ können mit einem Elektrodenwickel (Jelly Roll, JR, Swiss Roll), zum Beispiel als Lithium-Ionen-Akkumulator mit einem Elektrodenwickel (JR-Li-Ion-Akku), ausgebildet sein. Die Batteriezellen 500₁₁₁₁ bis 500ₖₗₘₙ können als Beutelzelle (Pouch Cell) ausgebildet sein. Dabei kann ein Beutel (Pouch), der zur Aufnahme und Aufbewahrung eines Elektrolyts dient, eine, zwei, drei oder mehr Elektrodenwickel umfassen. Weiterhin kann eine Schutzhülle (Protective Envelop) den oder die Elektrodenwickel und / oder den oder die Beutel umschließen. Die Schutzhülle kann ein widerstandsfähiges (stoßsicheres, kugelsicheres, schusssicheres, beschusssicheres, ballistic, anti-ballistic, bulletproof) Material, zum Beispiel ballistisches Gewebe, wie ballistisches Polyamid-Gewebe (ballistisches Nylon-Gewebe, Ballistic Nylon), umfassen. Somit können die Elektrodenwickel gegen eine Beschädigung von außen, beispielsweise bei einem Unfall, und / oder bei einem thermischen Durchgehen eines Elektrodenwickels, das erhebliche Kräfte auf benachbarte Batteriezellen ausüben kann, geschützt werden.

Der Energiespeicher 20 umfasst weiterhin eine Temperiervorrichtung zur Temperierung, d. h Kühlung oder Erwärmung, der Batteriezellen 500₁₁₁₁ bis 500ₖₗₘₙ mittels eines Temperiermittels, zum Beispiel einer Flüssigkeit wie Alkohol beispielsweise Propan-1,2,3-triol (Glycerol, Glycerin), Öl oder Wasser beispielsweise Salzwasser oder eines Flüssigkeitsgemischs. Beispielsweise kann zur Kühlung ein Kühlmittel wie Kühlwasser (Luft-Wärme-Kühler) oder ein Kältemittel, das durch die Wärme verdampft, (Verdampfer) die Wärme der Batteriezellen 500₁₁₁₁ bis 500ₖₗₘₙ aufnehmen und sie über einen Kühler bzw. Wärmetauscher 800 an die Umgebung oder eine Klimaanlage (Airconditioning, AC) abgegeben. Die Temperiervorrichtung umfasst Wärmetauscher zum Austausch der Wärme zwischen den Batteriezellen 500₁₁₁₁ bis 500ₖₗₘₙ und dem Temperiermittel, das durch die Temperiervorrichtung fließt. Die Wärmetauscher können beispielsweise als Kühlplatten ausgebildet sein. Beispielsweise kann jedes Batteriemodul 400₁₁₁ bis 400ₖₗₘ eine Kühlplatte oder eine Vielzahl von Kühlplatten umfassen. Die Batteriezellen 500₁₁₁₁ bis 500ₖₗₘₙ können auf den Kühlplatten montiert sein.

Die Temperiervorrichtung umfasst weiterhin Verbindungseinrichtungen wie Zuflussleitungen 150, 150₁-150ₖ, 150₁₁-150ₖₗ und Abflussleitungen 170, 170₁-170ₖ zum Verbinden der Komponenten der Temperiervorrichtung. Die Verbindungseinrichtungen können als Schläuche und / oder Rohre ausgebildet sein und beispielsweise Kunststoff oder Metall wie Aluminium, Eisen oder Stahl umfassen. Beispielsweise kann der Zufluss des Temperiermittels in Richtung der Batteriezellen 500₁₁₁₁ bis 500ₖₗₘₙ, wie in Figur 2 beispielhaft gezeigt, über eine Hauptzuflussleitung 150, Teilbatteriezuflussleitungen 150₁-150ₖ, die von der Hauptzuflussleitung 150 abzweigen, und Batteriestrangzuflussleitungen 150₁₁-150ₖₗ, die jeweils von den Teilbatteriezuflussleitungen 150₁-150ₖ abzweigen, erfolgen. Nach dem Wärmetausch mit den Batteriezellen 500₁₁₁₁ bis 500ₖₗₘₙ kann der Abfluss des Temperiermittels, wie in Figur 2 beispielhaft gezeigt, über Batteriestrangabflussleitungen 170₁₁-170ₖₗ, die jeweils in Teilbatterieabflussleitungen 170₁-170ₖ münden, die in ein Hauptabflussleitung 170 münden, erfolgen.

Die Temperiervorrichtung kann weiterhin Stelleinrichtungen zur Absperrung und / oder Regelung des Temperiermittelflusses umfassen. Sie Stelleinrichtungen können beispielsweise als Absperreinrichtungen wie Absperrhähne, Absperrklappen oder Absperrschieber, oder Ventile wie handbetätigte Ventile, elektromotorisch betätigte Ventile oder elektromagnetische Ventile ausgebildet sein. Beispielsweise können die Zuflüsse des Temperiermittels in Richtung der Batteriezellen 500₁₁₁₁ bis 500ₖₗₘₙ, wie in Figur 2 beispielhaft gezeigt, mittels von Batteriestrangzuflussventilen 160₁₁-160ₖₗ, die jeweils in den Batteriestrangzuflussleitungen 150₁₁-150ₖₗ angeordnet sind, einzeln bzw. individuell geregelt werden. Nach dem Wärmeaustausch mit den Batteriezellen 500₁₁₁₁ bis 500ₖₗₘₙ können der Abflüsse des Temperiermittels, wie in Figur 2 beispielhaft gezeigt, mittels von Batteriestrangabflussventilen 180₁₁-180ₖₗ, die jeweils in den Batteriestrangabflussleitungen 170₁₁-170ₖₗ angeordnet sind, einzeln bzw. individuell geregelt werden. Zur Regelung und / oder Sperrung des Durchflusses können die Zuflussventile 160₁₁-160ₖₗ, und die jeweils korrespondierende Abflussventile 180₁₁-180ₖₗ paarweise gesteuert werden.

Die Temperiervorrichtung kann den Wärmetauscher 800, der mit der Hauptzuflussleitung 150 und der Hauptabflussleitung 170 verbunden ist, umfassen, sodass die Temperiervorrichtung einen (geschlossenen) Temperiermittelkreislauf aufweist. Die Temperiervorrichtung kann weiterhin eine Fördereinrichtung 900 wie Pumpe, die mit der Hauptzuflussleitung 150 oder der Hauptabflussleitung 170 verbunden ist, umfassen, sodass der Temperiermittelfluss verstärkt und / oder geregelt werden kann.

Der Energiespeicher 20 umfasst weiterhin eine Überwachungsvorrichtung zur Überwachung des Energiespeichers 20 und der Batteriezellen 500₁₁₁₁ bis 500ₖₗₘₙ. Die Überwachungsvorrichtung umfasst eine Vielzahl von Sensoreinrichtungen 720 zur Erfassung von Temperaturmesswerten der Batteriezellen 500₁₁₁₁ bis 500ₖₗₘₙ und eine Verarbeitungseinrichtung 740 zur Verarbeitung der erfassten Temperaturmesswerte. Die Verarbeitungseinrichtung 740 kann eine Schnittstelle 746 zum Übertragen bzw. Empfangen der erfassten Termperaturmesswerte, einen Speicher 744 wie Schreib-Lese-Speicher (Random Access Memory, RAM) zum Speichern der empfangenen Termperaturmesswerte und von Befehlen bzw. Instruktionen zum Verarbeiten der gespeicherten Temperaturmesswerte und einen Prozessor wir Mikroprozessor oder Mikrocontroller zum Verarbeiten der gespeicherten Temperaturmesswerte mittels der gespeicherten Befehle umfassen. Die Sensoreinrichtungen 720 sind derart angeordnet, dass sie die Temperaturen der Batteriezellen 500₁₁₁₁ bis 500ₖₗₘₙ erfassen können, und über Leitungen 730, direkt oder indirekt, mit der Schnittstelle 760 verbunden. Vorzugsweise ist jeder Batteriezelle 500₁₁₁₁ bis 500ₖₗₘₙ eine Sensoreinrichtung 720 zugeordnet, sodass die Temperatur jeder Batteriezelle 500₁₁₁₁ bis 500ₖₗₘₙ erfasst werden kann.

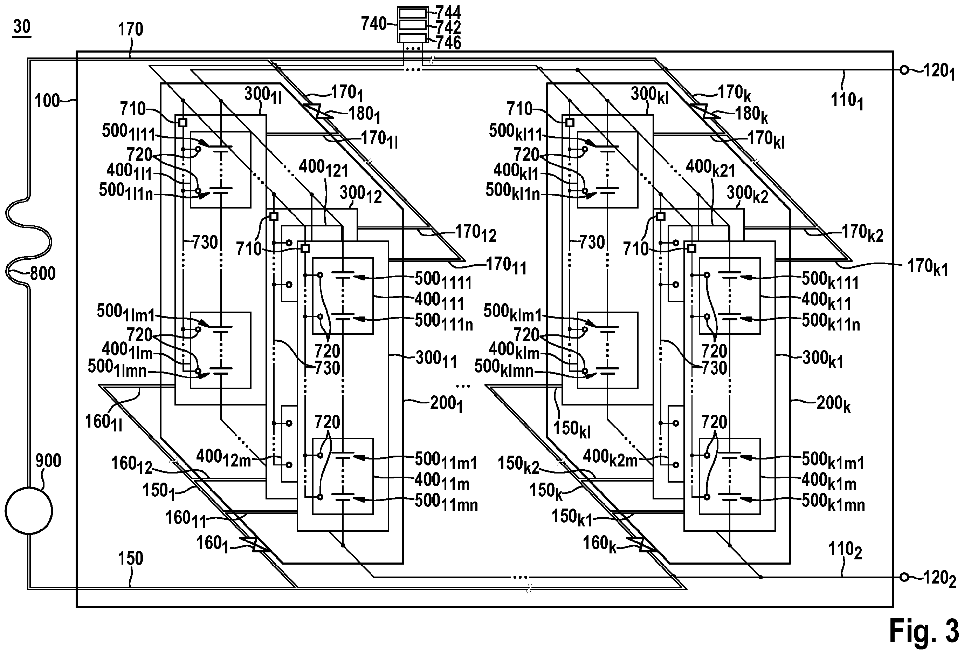

Die Überwachungsvorrichtung kann weiterhin eine Vielzahl von Vorverarbeitungseinrichtungen 710 zur Vorverarbeitung der erfassten Temperaturmesswerte umfassen, wobei jeder Vorverarbeitungseinrichtung 710 eine Anzahl der Vielzahl von Sensoreinrichtungen 720 zugeordnet ist. Die Vorverarbeitungseinrichtungen 710 können, wie in Figur 3 beispielhaft gezeigt, jeweils einem Batteriestrang 300₁₁-300ₖₗ zugeordnet sein. Alternativ können die Vorverarbeitungseinrichtungen 710 jeweils einem Batteriemodul 400₁₁₁-400ₖₗₘ oder einer Teilbatterie 200₁-200ₖ zugeordnet sein. Vorzugsweise sind die Vorverarbeitungseinrichtungen 710 jedoch gemäß der Struktur der Zuflussleitungen 150, 150₁-150ₖ, 150₁₁-150ₖₗ und / oder Abflussleitungen 170, 170₁-170ₖ zugeordnet, sodass die der Anzahl von Sensoreinrichtugen 720 zugeordneten Batteriezelle 500₁₁₁₁ bis 500ₖₗₘₙ von einem (Teil-) Fluss des Temperiermittels temperiert werden. Die Vorverarbeitungseinrichtungen 710 können, ähnlich wie die Verarbeitungseinrichtung 740, von der Anzahl von zugeordneten Sensoreinrichtungen 720 erfasste Temperaturmesswerte verarbeiten, sodass die Vorverarbeitung aller erfassten Temperaturmesswerte parallelisiert werden kann und / oder die Übertragung der Temperaturmesswerte vereinfacht werden kann. Beispielsweise kann eine Mittelwertbildung bereits in der jeweiligen Vorverarbeitungseinrichtungen 710 erfolgen. Somit kann ein Überwachungsverfahren über die Verarbeitungseinrichtung 740 und die Vielzahl von Vorverarbeitungseinrichtungen 710 verteilt ausgeführt werden.

Ein Überwachungsverfahren zur Überwachung des Energiespeichers 20 insbesondere seiner Temperatur und somit auch seiner Temperiervorrichtung umfasst zunächst ein Erfassen der Temperaturen jeder Batteriezelle 500₁₁₁₁ bis 500ₖₗₘₙ mittels der Sensoreinrichtungen 720 als erfasste Temperaturmesserte und ggf. ein Wiederholen des Erfassens. Das Überwachungsverfahren kann weiterhin ein Auswählen von Temperaturmesswerten aus den erfassten Temperaturmesswerten umfassen. Das Überwachungsverfahren kann weiterhin ein Bestimmen von Temperaturmittelwerten (Mittelwertbildung) jeweils aus den ausgewählten Temperaturmesswerten umfassen, wobei die ausgewählten Temperaturmesswerte jeweils einer Gruppe von Batteriezellen 500₁₁₁₁-500ₖₗₘₙ (Batteriegruppe) wie einer Teilbatterie 200₁-200ₖ, einem Batteriestrang 300₁₁-300ₖₗ oder einem Batteriemodul 400₁₁₁-400ₖₗₘ zugeordnet sein können, sodass die Temperaturmittelwerte für jede Teilbatterie 200₁-200ₖ (Teilbatteriemittelwerttemperatur), jeden Batteriestrang 300₁₁-300ₖₗ (Batteriestrangmittelwerttemperatur) und / oder jedes Batteriemodul 400₁₁₁-400ₖₗₘ (Batteriemodulmittelwerttemperatur) bestimmt werden kann. Das Überwachungsverfahren kann weiterhin ein Bestimmen von Temperaturmaximalwerten jeweils aus den ausgewählten Temperaturmesswerten umfassen, wobei die ausgewählten Temperaturmesswerte jeweils einer Teilbatterie 200₁-200ₖ, einem Batteriestrang 300₁₁-300ₖₗ oder einem Batteriemodul 400₁₁₁-400ₖₗₘ zugeordnet sein können, sodass die Temperaturmaximalwerte für jede Teilbatterie 200₁-200ₖ (Teilbatteriemaximaltemperatur), jeden Batteriestrang 300₁₁-300ₖₗ (Batteriestrangmaximaltemperatur) und / oder jedes Batteriemodul 400₁₁₁-400ₖₗₘ (Batteriemodulmaximaltemperatur) bestimmt werden kann. Das Überwachungsverfahren kann entsprechend ein Bestimmen von Temperaturminimalwerten jeweils aus den ausgewählten Temperaturmesswerten umfassen. Das Bestimmen des Temperaturmittelwerts aus den ausgewählten Temperaturmesswerten, Bestimmen der Temperaturmaximalwerte und / oder Bestimmen der Temperaturminimalwerte erfolgen vorzugsweise jeweils durch die Vorverarbeitungseinrichtungen 710.

Das Überwachungsverfahren kann weiterhin ein Bestimmen eines Temperaturmittelwerts (Mittelwertbildung) aus den bestimmten Temperaturmittelwerten, also den Teilbatteriemittelwerttemperaturen, Batteriestrangmittelwerttemperaturen oder Modulmittelwerttemperaturen, umfassen. Das Überwachungsverfahren kann weiterhin ein Bestimmen eines maximalen Temperaturmittelwerts aus den bestimmten Temperaturmittelwerten umfassen, sodass die maximale Teilbatteriemittelwerttemperatur (die "heißestes" Teilbatterie), Batteriestrangmittelwerttemperatur (der "heißestes" Batteriestrang) oder Batteriemodulmittelwerttemperatur (das "heißeste" Batteriemodul) bestimmt werden kann. Das Überwachungsverfahren kann weiterhin ein Bestimmen eines minimalen Temperaturmittelwerts aus den bestimmten Temperaturmittelwerten umfassen, sodass die minimale Teilbatteriemittelwerttemperatur (die "kühlste" Teilbatterie), Batteriestrangmittelwerttemperatur (der "kühlste" Batteriestrang) oder Batteriemodulmittelwerttemperatur (das "kühlste" Batteriemodul) bestimmt werden kann. Das Bestimmen des Temperaturmittelwerts, maximalen Temperaturmittelwerts und / oder minimalen Temperaturmittelwerts aus den bestimmten Temperaturmittelwerten erfolgt vorzugsweise durch die Verarbeitungseinrichtung 740.

Das Überwachungsverfahren kann weiterhin ein Vergleichen der bestimmten Temperaturmittelwerte miteinander bzw. untereinander umfassen. Dabei kann dieses Vergleichen der bestimmten Temperaturmittelwerte ein Vergleichen der bestimmten Temperaturmittelwerte mit dem bestimmten Temperaturmittelwert (der bestimmten Temperaturmittelwerte) umfassen. Wenn das Vergleichen der bestimmten Temperaturmittelwerte miteinander einen signifikanten Unterschied eines der bestimmten Temperaturmittelwerte ergibt, kann das Überwachungsverfahren einen Defekt der Temperiervorrichtung, dessen Lage mit dem unterschiedlichen bestimmten Temperaturmittelwert korrespondiert, erkennen, insbesondere wenn das Laden bzw. Entladen des Energiespeicher 20 im Rahmen der elektrischen Spezifikation erfolgt.

Das Überwachungsverfahren kann weiterhin ein Vergleichen der bestimmten Temperaturmittelwerte, des bestimmten Temperaturmittelwerts und / oder maximalen Temperaturmittelwerts mit einem vorbestimmten Temperaturwert Tₖ, der einer kritischen Betriebstemperatur des Energiespeichers 20 entspricht, und ein Ausgeben eines Befehls zum Maximalbetrieb der Temperiervorrichtung umfassen. Das Vergleichen und Ausgeben des Befehls zum Maximalbetrieb erfolgt vorzugsweise durch die Verarbeitungseinrichtung 740.

Das Überwachungsverfahren kann weiterhin ein Vergleichen der bestimmten Temperaturmittelwerte, des bestimmten Temperaturmittelwerts und / oder des maximalen Temperaturmittelwerts mit einem vorbestimmten Maximaltemperaturwert Tₘₐₓ, der der maximal zulässigen Betriebstemperatur des Energiespeichers 20 entspricht, und ein Ausgeben eines Befehls zum Abschalten des Energiespeichers 20 umfassen. Wenn das Vergleichen der bestimmten Temperaturmittelwerte oder des bestimmten Temperaturmittelwerts mit dem vorbestimmten Maximaltemperaturwert Tₘₐₓ ein Übersteigen des vorbestimmten Maximaltemperaturwert Tₘₐₓ ergibt, kann das Überwachungsverfahren einen Defekt der Temperiervorrichtung beispielsweise entlang der Zuflussleitungen 150, 150₁, 150₁₁-150ₖₗ und der Hauptabflussleitung 170, 170₁, 170₁₁-170ₖₗ, erkennen, insbesondere wenn das Laden bzw. Entladen des Energiespeicher 20 im Rahmen der elektrischen Spezifikation erfolgt. Zum Beispiel kann das Übersteigen einer bestimmten Batteriestrangmittelwerttemperatur des Batteriestrangs 300₁₂ eine Verstopfung der Batteriestrangzuflussleitung 150₁₂ bzw. Batteriestrangabflussleitung 170₁₂ oder einen Ausfall des Zuflussventils 160₁₂ bzw. Abflussventils 180₁₂ in einer geschlossenen Position erkennen bzw. detektieren und signalisieren. Dementsprechend kann das Übersteigen einer bestimmten Teilbatteriemittelwerttemperatur der Teilbatterie 200ₖ eine Verstopfung der Teilbatteriezuflussleitung 150ₖ bzw. Teilbatterieabflussleitung 170ₖ erkennen bzw. detektieren und signalisieren. Weiterhin kann ein gemeinsames Übersteigen mehrerer bestimmter Temperaturmittelwerte, zum Beispiel von bestimmten Batteriestrangmittelwerttemperaturen der Batteriestränge 300₁₂-300₁ₗ, eine Verstopfung der Teilbatteriezuflussleitung 150₁ erkennen bzw. detektieren und auf ein Teilstück zwischen den Batteriestrangzuflussleitungen 150₁₁ und 150₁₂ eingrenzen, da kein Übersteigen der bestimmten Batteriestrangmittelwerttemperatur des Batteriestrangs 300₁₁ eine freie Teilbatterieabflussleitung 170₁ signalisiert. Das Vergleichen und Ausgeben des Befehls zum Abschalten erfolgt vorzugsweise durch die Verarbeitungseinrichtung 740.

Figur 3 zeigt eine schematische Ansicht eines Energiespeichers 30 gemäß einer anderen Ausführungsform der Erfindung.

Der in Figur 3 gezeigte Energiespeicher 30 entspricht im Wesentlichen dem mit Bezug auf Figur 2 beschriebenen Energiespeicher 20. Die Zuflüsse des Temperiermittels in Richtung der Batteriezellen 500₁₁₁₁ bis 500ₖₗₘₙ können, wie in Figur 3 beispielhaft gezeigt, mittels von Teilbatteriezuflussventilen 160₁-160ₖ, die in den Teilbatteriezuflussleitungen 150₁-150ₖ angeordnet sind, geregelt werden. Nach dem Wärmeaustausch mit den Batteriezellen 500₁₁₁₁ bis 500ₖₗₘₙ können die Abflüsse des Temperiermittels, wie in Figur 3 beispielhaft gezeigt, mittels von Teilbatterieabflussventilen 180₁-180ₖ, die in den Teilbatterieabflussleitungen 170₁-170ₖ angeordnet sind, geregelt werden.

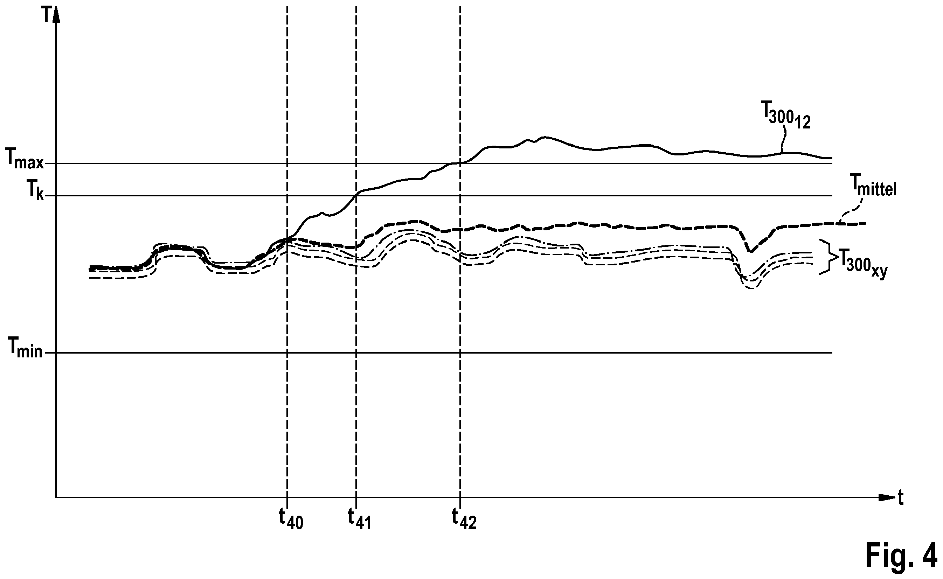

Figur 4 zeigt einen beispielhaften zeitlichen Temperaturverlauf bei einem Teilausfall gemäß der Ausführungsformen der Erfindung.

Entlang einer waagrechten Zeitachse t sind Zeitpunkte t₄₀ bis t₄₂ markiert. Entlang einer senkrechten Temperaturachse T ist ein zulässiger Temperaturbereich mit einer vorbestimmten Minimaltemperatur Tₘᵢₙ, beispielsweise +25 °C, und einer vorbestimmten Maximaltemperatur Tₘₐₓ, beispielsweise +40 °C, und eine kritische Temperatur Tₖ, beispielsweise +35 °C, zum Einschalten des Maximalbetriebs der Temperiervorrichtung markiert. Im zeitlichen Verlauf sind bestimmte Batteriestrangmittelwerttemperaturen T₃₀₀₍₁₂₎, T_{300(xy)} der Batteriestränge 300₁₂-300ₖₗ des in Figur 2 gezeigten Energiespeichers 20 und der daraus bestimmte Temperaturmittelwert Tₘᵢₜₜₑₗ beispielhaft aufgetragen.

Zum Zeitpunkt t₄₀ tritt in der Temperiervorrichtung ein Defekt bezüglich des Batteriestrangs 300₁₂ auf, zum Beispiel eine Verstopfung der Batteriestrangzuflussleitung 150₁₂ oder Batteriestrangabflussleitung 170₁₂ oder einen Ausfall des Zuflussventils 160₁₂ oder Abflussventils 180₁₂ in einer geschlossenen Position. Durch den Teilausfall der Kühlung steigt die bestimmte Batteriestrangmittelwerttemperatur T₃₀₀₍₁₂₎ des Batteriestrangs 300₁₂ und dadurch anteilig auch die bestimmte Temperaturmittelwert Tₘᵢₜₜₑₗ.

Zum Zeitpunkt t₄₁ erreicht die bestimmte Batteriestrangmittelwerttemperatur T₃₀₀₍₁₂₎ des Batteriestrangs 300₁₂ die kritische Temperatur Tₖ, und die Überwachungsvorrichtung bewirkt den Maximalbetrieb der Temperiervorrichtung. Die bestimmte Batteriestrangmittelwerttemperatur T₃₀₀₍₁₂₎ des Batteriestrangs 300₁₂ und auch die bestimmte Temperaturmittelwert Tₘᵢₜₜₑₗ steigen weiter.

Zum Zeitpunkt t₄₂ erreicht die bestimmte Batteriestrangmittelwerttemperatur T₃₀₀₍₁₂₎ des Batteriestrangs 300₁₂ die maximale Temperatur Tₘₐₓ und die Überwachungsvorrichtung bewirkt ein Abschalten des Energiespeichers 20. Vorausgehend oder alternativ kann die Überwachungsvorrichtung den betroffenen Batteriestrang 300₁₂ abschalten.

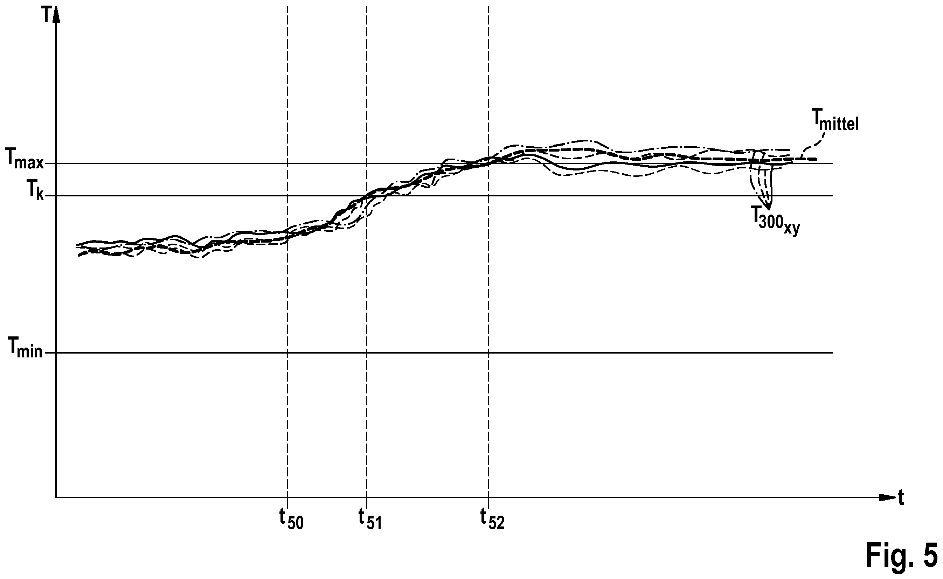

Figur 5 zeigt einen beispielhaften zeitlichen Temperaturverlauf bei einem Totalausfall gemäß der Ausführungsformen der Erfindung.

Entlang einer waagrechten Zeitachse t sind Zeitpunkte t₅₀ bis t₅₂ markiert. Entlang einer senkrechten Temperaturachse T ist, wie bereits mit Bezug auf Figur 4 beschrieben, der zulässige Temperaturbereich mit der vorbestimmten Minimaltemperatur Tₘᵢₙ und vorbestimmten Maximaltemperatur Tₘₐₓ und die kritische Temperatur Tₖ markiert. Im zeitlichen Verlauf sind bestimmte Batteriestrangmittelwerttemperaturen T_{300(xy)} der Batteriestränge 300₁₂-300ₖₗ des in Figur 2 gezeigten Energiespeichers 20 und der daraus bestimmte Temperaturmittelwert Tₘᵢₜₜₑₗ beispielhaft aufgetragen.

Zum Zeitpunkt t₅₀ tritt in der Temperiervorrichtung beispielsweise eine Verstopfung der Batteriezuflussleitung 150 oder Batterieabflussleitung 170, oder einen Ausfall der Pumpe 900 auf. Durch den Totalausfall der Kühlung steigen die bestimmte Batteriestrangmittelwerttemperaturen T_{300(xy)} der Batteriestränge 300₁₂-300ₖₗ und dadurch auch die bestimmte Temperaturmittelwert Tₘᵢₜₜₑₗ.

Zum Zeitpunkt t₅₁ erreichen die bestimmten Batteriestrangmittelwerttemperaturen T_{300(xy)} der Batteriestränge 300₁₂-300ₖₗ bzw. die bestimmte Temperaturmittelwert Tₘᵢₜₜₑₗ die kritische Temperatur Tₖ, und die Überwachungsvorrichtung bewirkt den Maximalbetrieb der Temperiervorrichtung. Die bestimmten Batteriestrangmittelwerttemperaturen T_{300(xy)} der Batteriestränge 300₁₂-300ₖₗ und auch die bestimmte Temperaturmittelwert Tₘᵢₜₜₑₗ steigen weiter.

Zum Zeitpunkt t₅₂ erreichen die bestimmten Batteriestrangmittelwerttemperaturen T_{300(xy)} der Batteriestränge 300₁₂-300ₖₗ bzw. die bestimmte Temperaturmittelwert Tₘᵢₜₜₑₗ die maximale Temperatur Tₘₐₓ und die Überwachungsvorrichtung bewirkt ein Abschalten des Energiespeichers 20.

Die Merkmale der Energiespeicher 20; 30, zum Beispiel der in Figuren 2 und 3 gezeigten Ventile, können miteinander kombiniert werden.

## Patentansprüche

1. Vorrichtung (710, 720, 730, 740) zur Überwachung eines Energiespeichers (20; 30) umfassend eine Vielzahl von Batteriezellen (500₁₁₁-500ₖₗₘₙ), die in einer Vielzahl von Batteriegruppen (200₁-200ₖ, 300₁₁-300ₖₗ, 400₁₁₁-400ₖₗₘ) angeordnet sind, und eine Temperiervorrichtung zur Temperierung der Batteriezellen (500₁₁₁₁-500ₖₗₘₙ) mittels einer Vielzahl von Teilflüssen eines Temperiermittels, wobei jeder der Teilflüsse einer der Batteriegruppen (200₁-200ₖ, 300₁₁-300ₖₗ, 400₁₁₁-400ₖₗₘ) zugeordnet ist,
**gekennzeichnet durch**:
- eine Vielzahl von Sensoreinrichtungen (720) zum Erfassen von Temperaturmesswerten der Batteriezellen (500₁₁₁₁-500ₖₗₘₙ), wobei jede der Sensoreinrichtungen (720) derart angeordnet ist, dass sie den Temperaturmesswert einer der Batteriezellen (500₁₁₁₁-500ₖₗₘₙ) erfassen kann;
- eine Einrichtung (710, 740) zum Bestimmen einer Vielzahl von Temperaturmittelwerten aus den erfassten Temperaturmesswerten, wobei jeder der bestimmten Temperaturmittelwerte derart bestimmt ist, dass er einer der Batteriegruppen (200₁-200ₖ, 300₁₁-300ₖₗ, 400₁₁₁-400ₖₗₘ) zugeordnet ist; und
- eine Einrichtung (740) zum Bewerten der Vielzahl von bestimmten Temperaturmittelwerten und, wenn einer der bestimmten Temperaturmittelwerte einen Temperaturschwellwert übersteigt, Bestimmen, dass der der zugeordneten Batteriegruppe (200₁-200ₖ, 300₁₁-300ₖₗ, 400₁₁₁-400ₖₗₘ) zugeordnete Teilfluss eine Störung aufweist.

2. Die Vorrichtung (710, 720, 730, 740) nach Anspruch 1, wobei:
- der Temperaturschwellwert einem vorbestimmten maximalen Temperaturwert entspricht; oder
- der Temperaturschwellwert durch einen Temperaturmittelwert aus der Vielzahl von Temperaturmittelwerten bestimmt oder mitbestimmt ist.

3. Die Vorrichtung (710, 720, 730, 740) nach Anspruch 1 oder 2, wobei:
- die Einrichtung (710, 740) zum Bestimmen als dezentrale Vorverarbeitungseinrichtung (710) ausgebildet ist;
- die Einrichtung (710, 740) zum Bestimmen als zentrale Verarbeitungseinrichtung (740) ausgebildet ist; oder
- die Einrichtung (740) zum Bewerten und Bestimmen als zentrale Verarbeitungseinrichtung (740) ausgebildet ist.

4. Die Vorrichtung (710, 720, 730, 740) nach einem der Ansprüche 1 bis 3, wobei:
- die Batteriegruppen (200₁-200k, 300₁₁-300ₖₗ, 400₁₁₁-400ₖₗₘ) als Teilbatterien (200₁-200ₖ), Batteriestänge (300₁₁-300ₖₗ) oder Batteriemodule (400₁₁₁-400ₖₗₘ) ausgebildet sind.

5. Energiespeicher (20; 30), umfassend:
- die Vorrichtung (710, 720, 730, 740) nach einem der Ansprüche 1 bis 4.

6. Fahrzeug, Kraftfahrzeug, Elektrokraftfahrzeug oder Hybridfahrzeug, umfassend:
- die Vorrichtung (710, 720, 730, 740) nach einem der Ansprüche 1 bis 4 verbunden mit dem Fahrzeug, oder
- den Energiespeicher nach Anspruch 5 verbunden mit dem Fahrzeug.

7. Verfahren zur Überwachung eines Energiespeichers (20; 30) umfassend eine Vielzahl von Batteriezellen (500₁₁₁₁-500ₖₗₘₙ), die in einer Vielzahl von Batteriegruppen (200₁-200ₖ, 300₁₁-300ₖₗ, (400₁₁₁-400ₖₗₘ) angeordnet sind, und eine Temperiervorrichtung zur Temperierung der Batteriezellen (500₁₁₁₁-500ₖₗₘₙ) mittels einer Vielzahl von Teilflüssen eines Temperiermittels, wobei jeder der Teilflüsse einer der Batteriegruppen (200₁-200ₖ, 300₁₁-300ₖₗ, 400₁₁₁-400ₖₗₘ) zugeordnet ist, **gekennzeichnet durch**:
- Erfassen von Temperaturmesswerten der Batteriezellen (500₁₁₁₁-500ₖₗₘₙ) mittels einer Vielzahl von Sensoreinrichtungen (720), wobei jede der Sensoreinrichtungen (720) derart angeordnet wird, dass sie den Temperaturmesswert einer der Batteriezellen (500₁₁₁₁-500ₖₗₘₙ) erfassen kann;
- Bestimmen einer Vielzahl von Temperaturmittelwerten aus den erfassten Temperaturmesswerten mittels einer ersten Einrichtung (710, 740), wobei jeder der bestimmten Temperaturmittelwerte derart bestimmt wird, dass er einer der Batteriegruppen (200₁-200ₖ, 300₁₁-300ₖₗ, 400₁₁₁-400ₖₗₘ) zugeordnet wird; und
- Bewerten der Vielzahl von bestimmten Temperaturmittelwerten und, wenn einer der bestimmten Temperaturmittelwerte einen Temperaturschwellwert übersteigt, Bestimmen, dass der der zugeordneten Batteriegruppe (200₁-200ₖ, 300₁₁-300ₖₗ, 400₁₁₁-400ₖₗₘ) zugeordnete Teilfluss eine Störung aufweist, mittels einer zweiten Einrichtung (740).

8. Das Verfahren nach Anspruch 7, wobei:
- der Temperaturschwellwert einem vorbestimmten maximalen Temperaturwert entspricht; oder
- der Temperaturschwellwert durch einen Temperaturmittelwert aus der Vielzahl von Temperaturmittelwerten bestimmt oder mitbestimmt wird.

9. Das Verfahren nach Anspruch 7 oder 8, wobei:
- die Einrichtung (710, 740) zum Bestimmen als dezentrale Vorverarbeitungseinrichtung (710) ausgebildet wird;
- die Einrichtung (710, 740) zum Bestimmen als zentrale Verarbeitungseinrichtung (740) ausgebildet wird; oder
- die Einrichtung (740) zum Bewerten und Bestimmen als zentrale Verarbeitungseinrichtung (740) ausgebildet wird.

10. Das Verfahren nach einem der Ansprüche 7 bis 9, wobei:
- die Batteriegruppen (200₁-200ₖ, 300₁₁-300ₖₗ, 400₁₁₁-400ₖₗₘ) als Teilbatterien (200₁-200ₖ), Batteriestänge (300₁₁-300ₖₗ) oder Batteriemodule (400₁₁₁-400ₖₗₘ) ausgebildet werden.

11. Computerprogramm, das auf einem Datenträger oder in einem Speicher (744) eines Computers (710, 740) gespeichert ist und das von dem Computer (710, 740) lesbare Befehle umfasst, die zur Ausführung des Verfahrens nach einem der Ansprüche 7 bis 10 bestimmt sind, wenn die Befehle auf dem Computer (710, 740) ausgeführt werden.

12. Computerprogrammprodukt, umfassend das Computerprogramm nach Anspruch 11.

## Claims

1. Apparatus (710, 720, 730, 740) for monitoring an energy store (20; 30) comprising a multiplicity of battery cells (500₁₁₁₁-500ₖₗₘₙ) arranged in a multiplicity of battery groups (200₁-200ₖ, 300₁₁-300ₖₗ, 400₁₁₁-400ₖₗₘ) and a temperature control apparatus for controlling the temperature of the battery cells (500₁₁₁₁-500ₖₗₘₙ) by means of a multiplicity of partial flows of a temperature control medium, each of the partial flows being assigned to one of the battery groups (200₁-200ₖ, 300₁₁-300ₖₗ, 400₁₁₁-400ₖₗₘ),
**characterized by**:
- a multiplicity of sensor devices (720) for recording temperature measured values of the battery cells (500₁₁₁₁-500ₖₗₘₙ), each of the sensor devices (720) being arranged in such a manner that it can record the temperature measured value of one of the battery cells (500₁₁₁₁-500ₖₗₘₙ);
- a device (710, 740) for determining a multiplicity of temperature mean values from the recorded temperature measured values, each of the determined temperature mean values being determined in such a manner that it is assigned to one of the battery groups (200₁-200ₖ, 300₁₁-300ₖₗ, 400₁₁₁-400ₖₗₘ); and
- a device (740) for assessing the multiplicity of determined temperature mean values and, if one of the determined temperature mean values exceeds a temperature threshold value, determining that the partial flow assigned to the assigned battery group (200₁-200ₖ, 300₁₁-300ₖₗ, 400₁₁₁-400ₖₗₘ) has a disturbance.

2. Apparatus (710, 720, 730, 740) according to Claim 1:
- the temperature threshold value corresponding to a predetermined maximum temperature value; or
- the temperature threshold value being determined or concomitantly determined by a temperature mean value from the multiplicity of temperature mean values.

3. Apparatus (710, 720, 730, 740) according to Claim 1 or 2:
- the determination device (710, 740) being in the form of a decentralized preprocessing device (710);
- the determination device (710, 740) being in the form of a central processing device (740); or
- the assessment and determination device (740) being in the form of a central processing device (740).

4. Apparatus (710, 720, 730, 740) according to one of Claims 1 to 3:
- the battery groups (200₁-200ₖ, 300₁₁-300ₖₗ, 400₁₁₁-400ₖₗₘ) being in the form of battery elements (200₁-200ₖ), battery strings (300₁₁-300ₖₗ) or battery modules (400₁₁₁-400ₖₗₘ).

5. Energy store (20; 30) comprising:
- the apparatus (710, 720, 730, 740) according to one of Claims 1 to 4.

6. Vehicle, motor vehicle, electric motor vehicle or hybrid vehicle comprising:
- the apparatus (710, 720, 730, 740) according to one of Claims 1 to 4 connected to the vehicle, or
- the energy store according to Claim 5 connected to the vehicle.

7. Method for monitoring an energy store (20; 30) comprising a multiplicity of battery cells (500₁₁₁₁-500ₖₗₘₙ) arranged in a multiplicity of battery groups (200₁-200ₖ, 300₁₁-300ₖₗ, 400₁₁₁-400ₖₗₘ) and a temperature control apparatus for controlling the temperature of the battery cells (500₁₁₁₁-500ₖₗₘₙ) by means of a multiplicity of partial flows of a temperature control medium, each of the partial flows being assigned to one of the battery groups (200₁-200ₖ, 300₁₁-300ₖₗ, 400₁₁₁-400ₖₗₘ), **characterized by**:
- recording temperature measured values of the battery cells (500₁₁₁₁-500ₖₗₘₙ) by means of a multiplicity of sensor devices (720), each of the sensor devices (720) being arranged in such a manner that it can record the temperature measured value of one of the battery cells (500₁₁₁₁-500ₖₗₘₙ);
- determining a multiplicity of temperature mean values from the recorded temperature measured values by means of a first device (710, 740), each of the determined temperature mean values being determined in such a manner that it is assigned to one of the battery groups (200₁-200ₖ, 300₁₁-300ₖₗ, 400₁₁₁-400ₖₗₘ); and
- assessing the multiplicity of determined temperature mean values and, if one of the determined temperature mean values exceeds a temperature threshold value, determining that the partial flow assigned to the assigned battery group (200₁-200ₖ, 300₁₁-300ₖₗ, 400₁₁₁-400ₖₗₘ) has a disturbance by means of a second device (740).

8. Method according to Claim 7:
- the temperature threshold value corresponding to a predetermined maximum temperature value; or
- the temperature threshold value being determined or concomitantly determined by a temperature mean value from the multiplicity of temperature mean values.

9. Method according to Claim 7 or 8:
- the determination device (710, 740) being in the form of a decentralized preprocessing device (710);
- the determination device (710, 740) being in the form of a central processing device (740); or
- the assessment and determination device (740) being in the form of a central processing device (740).

10. Method according to one of Claims 7 to 9:
- the battery groups (200₁-200ₖ, 300₁₁-300ₖₗ, 400₁₁₁-400ₖₗₘ) being in the form of battery elements (200₁-200ₖ), battery strings (300₁₁-300ₖₗ) or battery modules (400₁₁₁-400ₖₗₘ).

11. Computer program which is stored on a data storage medium or in a memory (744) of a computer (710, 740) and comprises instructions which can be read by the computer (710, 740) and are intended to carry out the method according to one of Claims 7 to 10 when the instructions are executed on the computer (710, 740).

12. Computer program product comprising the computer program according to Claim 11.

## Revendications

1. Dispositif (710, 720, 730, 740) de surveillance d'un accumulateur d'énergie (20 ; 30) comprenant une pluralité d'éléments de batterie (500₁₁₁₁-500ₖₗₘₙ) qui sont disposés dans une pluralité de groupes de batteries (200₁-200ₖ, 300₁₁-300ₖₗ, 400₁₁₁-400ₖₗₘ), et un dispositif de régulation de température pour réguler la température des éléments de batterie (500₁₁₁₁-500ₖₗₘₙ) au moyen d'une pluralité de flux partiels d'un moyen de régulation de température, dans lequel chacun des flux partiels est associé à l'un des groupes de batteries (200₁-200ₖ, 300₁₁-300ₖₗ, 400₁₁₁-400ₖₗₘ), **caractérisé par**:
- une pluralité de dispositifs de détection (720) pour détecter des valeurs de mesure de température des éléments de batterie (500₁₁₁₁-500ₖₗₘₙ), dans lequel chacun des dispositifs de détection (720) est disposé de manière à ce qu'il puisse détecter la valeur de mesure de température de l'un des éléments de batterie (500₁₁₁₁-500ₖₗₘₙ);
- un dispositif (710, 740) pour déterminer une pluralité de valeurs de température moyennes à partir des valeurs de mesure de température détectées, dans lequel chacune des valeurs de température moyennes déterminées est déterminée de manière à ce qu'elle soit associée à l'un des groupes de batteries (200₁- 200ₖ, 300₁₁-300ₖₗ, 400₁₁₁-400ₖₗₘ) ; et
- un dispositif (740) pour évaluer la pluralité de valeurs de température moyennes déterminées et, lorsque l'une des valeurs de température moyennes déterminées dépasse une valeur de seuil de température, déterminer que le flux partiel associé au groupe de batteries associé (200₁-200ₖ, 300₁₁-300ₖₗ, 400₁₁₁-400ₖₗₘ) présente une perturbation.

2. Dispositif (710, 720, 730, 740) selon la revendication 1, dans lequel :
- la valeur de seuil de température correspond à une valeur de température maximale prédéterminée ; ou
- la valeur de seuil de température est déterminée ou déterminée de manière associée par une valeur de température moyenne à partir de la pluralité de valeurs de température moyennes.

3. Dispositif (710, 720, 730, 740) selon la revendication 1 ou 2, dans lequel :
- le dispositif (710, 740) de détermination est réalisé sous la forme d'un dispositif de prétraitement décentralisé (710) ;
- le dispositif (710, 740) de détermination est réalisé sous la forme d'un dispositif de traitement centralisé (740) ; ou
- le dispositif (740) d'évaluation et de détermination est réalisé sous la forme d'un dispositif de traitement centralisé (740).

4. Dispositif (710, 720, 730, 740) selon l'une quelconque des revendications 1 à 3, dans lequel :
- les groupes de batteries (200₁-200ₖ, 300₁₁-300ₖₗ, 400₁₁₁-400ₖₗₘ) sont réalisés sous la forme de batteries partielles (200₁-200ₖ), de blocs de batteries (300₁₁-300ₖₗ) ou de modules de batteries (400₁₁₁-400ₖₗₘ).

5. Accumulateur d'énergie (20 ; 30), comprenant :
- le dispositif (710, 720, 730, 740) selon l'une quelconque des revendications 1 à 4.

6. Véhicule, véhicule automobile, véhicule automobile électrique ou véhicule hybride, comprenant :
- le dispositif (710, 720, 730, 740) selon l'une quelconque des revendications 1 à 4 relié au véhicule,
ou
- l'accumulateur d'énergie selon la revendication 5 relié au véhicule.

7. Procédé de surveillance d'un accumulateur d'énergie (20 ; 30) comprenant une pluralité d'éléments de batterie (500₁₁₁₁-500ₖₗₘₙ) qui sont disposés dans une pluralité de groupes de batteries (200₁-200ₖ, 300₁₁-300ₖₗ, 400₁₁₁-400ₖₗₘ), et un dispositif de régulation de température pour réguler la température des éléments de batterie (500₁₁₁₁-500ₖₗₘₙ) au moyen d'une pluralité de flux partiels d'un moyen de régulation de température, dans lequel chacun des flux partiels est associé à l'un des groupes de batteries (200₁-200ₖ, 300₁₁-300ₖₗ, 400₁₁₁-400ₖₗₘ), **caractérisé par** le fait de :
- détecter des valeurs de mesure de température des éléments de batterie (500₁₁₁₁-500ₖₗₘₙ) au moyen d'une pluralité de dispositifs de détection (720), dans lequel chacun des dispositifs de détection (720) est disposé de manière à ce qu'il puisse détecter la valeur de mesure de température de l'un des éléments de batterie (500₁₁₁₁-500ₖₗₘₙ) ;
- déterminer une pluralité de valeurs de température moyennes à partir des valeurs de mesure de température détectées au moyen d'un premier dispositif (710, 740), dans lequel chacune des valeurs de température moyennes déterminées est déterminée de manière à ce qu'elle soit associée à l'un des groupes de batteries (200₁-200ₖ, 300₁₁-300ₖₗ, 400₁₁₁-400ₖₗₘ); et
- évaluer la pluralité de valeurs de température moyennes déterminées et, lorsque l'une des valeurs de température moyennes déterminées dépasse une valeur de seuil de température, déterminer que le flux partiel associé au groupe de batteries associé (200₁-200ₖ, 300₁₁-300ₖₗ, 400₁₁₁-400ₖₗₘ) présente une perturbation, au moyen d'un deuxième dispositif (740).

8. Procédé selon la revendication 7, dans lequel :
- la valeur de seuil de température correspond à une valeur de température maximale prédéterminée ; ou
- la valeur de seuil de température est déterminée ou déterminée de manière associée par une valeur de température moyenne à partir de la pluralité de valeurs de température moyennes.

9. Procédé selon la revendication 7 ou 8, dans lequel :
- le dispositif (710, 740) de détermination est réalisé sous la forme d'un dispositif de prétraitement décentralisé (710) ;
- le dispositif (710, 740) de détermination est réalisé sous la forme d'un dispositif de traitement centralisé (740) ; ou
- le dispositif (740) d'évaluation et de détermination est réalisé sous la forme d'un dispositif de traitement centralisé (740).

10. Procédé selon l'une quelconque des revendications 7 à 9, dans lequel :
- les groupes de batteries (200₁-200ₖ, 300₁₁-300ₖₗ, 400₁₁₁-400ₖₗₘ) sont réalisés sous la forme de batteries partielles (200₁ - 200ₖ), de blocs de batteries (300₁₁-300ₖₗ) ou de modules de batteries (400₁₁₁-400ₖₗₘ).

11. Programme d'ordinateur qui est stocké sur un support de données ou dans une mémoire (744) d'un ordinateur (710, 740) et qui comprend des instructions lisibles par l'ordinateur (710, 740), qui sont déterminées pour la mise en oeuvre du procédé selon l'une quelconque des revendications 7 à 10 lorsque les instructions sont exécutées sur l'ordinateur (710, 740).

12. Produit de programme d'ordinateur, comprenant le programme d'ordinateur selon la revendication 11.
